# EUROPÄISCHE PATENTANMELDUNG

(11) **EP 3 804 887 A1**
(43) Veröffentlichungstag der Anmeldung: **14.04.2021**
(21) Anmeldenummer: 20196682.7
(22) Anmeldetag: 17.09.2020
(51) Int. Cl.: B22F 10/18, B22F 12/58, B29C 64/118, B33Y 10/00, B33Y 30/00, B33Y 80/00, C06B 21/00, C06B 45/12, F02K 9/12, F02K 9/24

(54) **3D-DRUCKVERFAHREN UND 3D-DRUCKVORRICHTUNG FÜR EINEN SPRENGKOPF**

(30) Priorität: 11.10.2019 DE 102019007088
(71) Anmelder: MBDA Deutschland GmbH, 86529 Schrobenhausen (DE)
(72) Erfinder: Wagner, Dieter, 85591 Vaterstetten (DE)
(74) Vertreter: Isarpatent

(57) **Zusammenfassung**

Ein 3D-Druckverfahren zur additiven Fertigung einer Sprengladung für einen Sprengkopf umfasst schichtweises Ablegen eines extrudierfähigen Modelliermaterials in Materiallagen, wobei das extrudierfähige Modelliermaterial zumindest zwei unterschiedliche aushärtbare Sprengstoffgemische umfasst, wobei in ersten Bereichen der Materiallagen ein erstes aushärtbares Sprengstoffgemisch und in zweiten Bereichen der Materiallagen, die sich von den ersten Bereichen unterscheiden, ein zweites aushärtbares Sprengstoffgemisch abgelegt wird, wobei die ersten Bereiche und die zweiten Bereiche in den Materiallagen zur Einstellung einer vorgegebenen Detonationsdruckwellenform des Sprengkopfes angeordnet werden; Aushärten des extrudierfähigen Modelliermaterials in den Materiallagen zur Bildung der Sprengladung; und Ablegen eines Zündmaterials in den Materiallagen zur Bildung eines Zünders zur Zündung der Sprengladung des Sprengkopfes.

## Beschreibung

Die vorliegende Erfindung betrifft ein 3D-Druckverfahren zur additiven Fertigung einer Sprengladung für einen Sprengkopf. Ferner betrifft die vorliegende Erfindung eine 3D-Druckvorrichtung zur additiven Fertigung einer Sprengladung für einen Sprengkopf mit einem derartigen 3D-Druckverfahren.

Bei generativen bzw. additiven Fertigungsverfahren, auch allgemein als "3D-Druckverfahren" bezeichnet, werden ausgehend von einem digitalisierten geometrischen Modell eines Objekts ein oder mehrere Ausgangsmaterialien sequentiell in Lagen übereinandergeschichtet und ausgehärtet. So wird beispielsweise bei der Schmelzschichtung (Englisch: "Fused Deposition Modeling", FDM) ein Bauteil schichtweise aus einem Modelliermaterial, beispielsweise einem Kunststoff oder einem Metall, aufgebaut, indem das Modelliermaterial in fließfähiger oder allgemeiner in extrudierfähiger Form aus einer Düse ausgepresst und auf eine Unterlage aufgebracht wird, wodurch sich nach Abkühlung ein festes, zusammenhängendes Bauteil ergibt. 3D-Drucken bietet außergewöhnliche Designfreiheit und erlaubt es unter anderem Objekte mit überschaubaren Aufwand herzustellen, welche mit herkömmlichen Methoden nicht oder nur unter erheblichem Aufwand herstellbar wären. Aus diesem Grund sind 3D-Druckverfahren derzeit weit verbreitet im Industriedesign, in der Automobilindustrie, der Luft- und Raumfahrtindustrie oder generell in der industriellen Produktentwicklung, in der eine ressourceneffiziente Prozesskette zur bedarfsgerechten Klein- und Großserienfertigung individualisierter Bauteile eingesetzt wird.

Mitunter wird vorgeschlagen, explosive bzw. energetische Materialien mit derartigen oder ähnlichen extrusionsbasierten 3D-Druckverfahren herzustellen, siehe beispielsweise die Druckschriften Chiroli et al., "Additive Manufacturing of Energetic Materials," Solid Freeform Fabrication 2018: Proceedings of the 29th Annual International Solid Freeform Fabrication Symposium, 2018 und Johnson et al., "Effect of explosive charge geometry on shock wave propagation," AIP Conference Proceedings 1979, 2018. Diese Verfahren bieten Vorteile gegenüber herkömmlichen Verfahren, bei welchen gezielte Detonationsdruckwellenformen von Sprengstoffen und/oder Sprengköpfen nur mit hohem Aufwand möglich sind. Typischerweise werden bei derartigen herkömmlichen Verfahren Sprengsätze in speziellen, sehr kostenintensiven Behältern geformt, welche hohe Anforderungen an Genauigkeit und Festigkeit erfüllen müssen, um eine gewünschte Detonationsdruckwelle zu erzielen. Häufig ist es zudem notwendig, zunächst Teilsprengsätze herzustellen, die dann in weiteren Arbeitsschritten nachbearbeitet und erst zu finalen Sprengsätzen zusammengesetzt werden müssen. Dies macht die entsprechenden herkömmlichen Verfahren noch zeitaufwendiger und fehleranfälliger.

Vor diesem Hintergrund liegt der vorliegenden Erfindung die Aufgabe zugrunde, flexiblere Lösungen für die Herstellung von Sprengladungen mit additiven Verfahren zu finden.

Erfindungsgemäß wird diese Aufgabe gelöst durch ein 3D-Druckverfahren mit den Merkmalen des Patentanspruchs 1 und durch eine 3D-Druckvorrichtung mit den Merkmalen des Patentanspruchs 7.

Demgemäß ist ein 3D-Druckverfahren zur additiven Fertigung einer Sprengladung für einen Sprengkopf vorgesehen. Das 3D-Druckverfahren umfasst schichtweises Ablegen eines extrudierfähigen Modelliermaterials in Materiallagen, wobei das extrudierfähige Modelliermaterial zumindest zwei unterschiedliche aushärtbare Sprengstoffgemische umfasst, wobei in ersten Bereichen der Materiallagen ein erstes aushärtbares Sprengstoffgemisch und in zweiten Bereichen der Materiallagen, die sich von den ersten Bereichen unterscheiden, ein zweites aushärtbares Sprengstoffgemisch abgelegt wird, wobei die ersten Bereiche und die zweiten Bereiche in den Materiallagen zur Einstellung einer vorgegebenen Detonationsdruckwellenform des Sprengkopfes angeordnet werden; Aushärten des extrudierfähigen Modelliermaterials in den Materiallagen zur Bildung der Sprengladung; und Ablegen eines Zündmaterials in den Materiallagen zur Bildung eines Zünders zur Zündung der Sprengladung des Sprengkopfes.

Ferner ist eine 3D-Druckvorrichtung zur additiven Fertigung einer Sprengladung für einen Sprengkopf mit einem erfindungsgemäßen 3D-Druckverfahren vorgesehen.

Ferner ist ein computerlesbares Medium vorgesehen, auf welchem computerausführbare Anweisungen gespeichert sind, die bei Ausführung mittels einer datenverarbeitenden Vorrichtung die datenverarbeitende Vorrichtung dazu veranlassen, ein erfindungsgemäßes 3D-Druckverfahren auszuführen.

Eine der vorliegenden Erfindung zugrunde liegende Idee besteht darin, beliebige Detonationsdruckwellenform von Sprengladungen ohne Formwerkzeuge zu realisieren, indem mehrere Sprengstoffgemische mit unterschiedlichen Eigenschaften gezielt mit einem additiven Verfahren schichtweise abgelegt und dabei variiert werden. Durch entsprechende Anordnung bzw. Verteilung der jeweiligen Sprengstoffgemische können unterschiedliche Detonationsverläufe eingestellt werden. Die entsprechende Verteilung der Sprengstoffgemische in den Materialschichten bzw. Materiallagen kann beispielsweise mit einer entsprechenden Software für den gewünschten bzw. vorgegebenen Detonationsverlauf berechnet werden. Hierbei hat sowohl die räumliche Verteilung der Sprengstoffgemische als auch deren zeitliche Detonationsfolge bzw. Detonationsgeschwindigkeit einen Einfluss auf den Detonationsverlauf. Beide Aspekte können von der Software im Zuge der Aufstellung der vorgegebenen Detonationsdruckwellenform berücksichtigt werden. Die hierdurch erzielte Flexibilität hat wiederum Auswirkungen auf den umgebenen Behälter des Sprengkopfes, welcher nun als einfacher Standardbehälter ausgelegt werden kann, da die Detonationsdruckwellenform bereits alleine auf Basis der additiven Fertigung der Sprengladung eingestellt wird.

Mit dem erfindungsgemäßen Verfahren bzw. der erfindungsgemäßen Vorrichtung lassen sich unterschiedlichste Eigenschaften in einer Sprengladung in einem einfachen zusammenhängenden Verfahren erzeugen. 3D-Druckverfahren sind insbesondere vorteilhaft, da sie die Herstellung von dreidimensionalen Komponenten in urformenden Verfahren ermöglichen, ohne spezielle, auf die äußere Form der Komponenten abgestimmte Fertigungswerkzeuge zu benötigen. Dadurch werden hocheffiziente, Material sparende und Zeit sparende Herstellungsprozesse für Bauteile und Komponenten ermöglicht. Besonders vorteilhaft sind derartige 3D-Druckverfahren für die Herstellung von Sprengladungen, da auch komplexe Geometrien beispielsweise mit hinterschnittigen Geometrien ohne großen Aufwand umsetzbar sind. Weiterhin können derart einfach zusätzliche Materialien in eine Sprengladung eingebracht werden.

3D-Druckverfahren im Sinne der vorliegenden Anmeldung umfassen alle generativen bzw. additiven Fertigungsverfahren, bei welchen auf der Basis von geometrischen Modellen Objekte vordefinierter Form aus formlosen Materialien wie Flüssigkeiten oder formneutralen Halbzeugen wie etwa band- oder drahtförmigem Material mittels chemischer und/oder physikalischer Prozesse in einem speziellen generativen Fertigungssystem hergestellt werden. 3D-Druckverfahren im Sinne der vorliegenden Anmeldung verwenden dabei additive Prozesse, bei denen das Ausgangsmaterial schichtweise in vorgegebenen Formen sequentiell aufgebaut wird. Insbesondere umfassen derartige 3D-Druckverfahren extrusionsbasierte additive Verfahren.

Die Wirkung der Sprengladung kann darüber hinaus in der üblichen Art und Weise weiter beeinflusst werden, indem entsprechende Zündmechanismen vorgesehen werden, die den Detonationsverlauf ebenfalls definieren können. Beispielsweise können ein oder mehrere Zünder an unterschiedlichen Positionen angebracht werden. Ferner können durch geeignete Wahl des Materials und der Geometrie des umgebenden Behälters einschließlich seiner Abdeckung (z.B. in eine Wirkrichtung) auch unterschiedliche Detonationswirkungen wie Blast oder Hohlladungswirkung erzeugt werden.

Vorteilhafte Ausgestaltungen und Weiterbildungen ergeben sich aus den weiteren Unteransprüchen sowie aus der Beschreibung unter Bezugnahme auf die Figuren.

Gemäß einer Weiterbildung kann das extrudierfähige Modelliermaterial derart abgelegt werden, dass eine inhomogene Sprengstoffverteilung in der Sprengladung entsteht.

Gemäß einer Weiterbildung können die unterschiedlichen aushärtbaren Sprengstoffgemische unterschiedliche Detonationsleistungen und/oder Detonationsgeschwindigkeiten aufweisen.

Durch entsprechende vorteilhafte Wahl sowohl der jeweiligen Detonationsleistung als auch derjeweiligen Detonationsgeschwindigkeit kann der zeitliche Verlauf der Detonation sowie deren räumliche und zeitliche Druckwellenform eingestellt werden. Beispielsweise kann ein erstes Sprengstoffgemisch mit einer ersten Detonationsleistung für eine erste Detonationsphase in hinteren Schichten der Sprengladung bezogen auf eine Wirkrichtung positioniert werden. Darüber kann ein zweites Sprengstoffgemisch mit einer zweiten Detonationsleistung in vorderen Schichten bezogen auf die Wirkrichtung der Sprengladung vorgesehen sein, wobei die zweite Detonationsleistung kleiner als die erste Detonationsleistung konfiguriert sein kann. In diesem Fall liefert die Sprengladung somit einen zweistufigen Detonationsverlauf.

Gemäß einer Weiterbildung kann das extrudierfähige Modelliermaterial weiterhin ein aushärtbares inertes Material umfassen. Das aushärtbare inerte Material kann in dritten Bereichen der Materiallagen abgelegt werden, die sich von den ersten Bereichen und den zweiten Bereichen unterscheiden. Das inerte Material kann nach Aushärtung inerte Bereiche in der Sprengladung definieren.

Zusätzlich zu Sprengstoffgemischen mit unterschiedlichen Eigenschaften können somit auch gezielt inerte, d.h. nicht energetische bzw. reaktive Materialien bzw. Stoffe in die Sprengladung eingebracht werden. Beispielsweise können derart Bereiche ausgespart werden, in denen Sprengstoffgemische nicht benötigt werden. In einem konkreten Beispiel kann der Detonationsverlauf gezielt ausgerichtet werden. Beispielsweise können Effekte wie Reflexion der Detonationsdruckwelle an einer Grenzschicht zu dem bzw. den inerten Stoffen ausgenutzt werden. In einem weiteren Beispiel können ein oder mehrere Trichter mit Hilfe inerter Materialien innerhalb der Sprengladung geformt werden, entlang derer ein oder mehrere Sprengstoffgemische gezündet werden. Eine Ausbreitungsrichtung der entsprechenden Detonationsdruckwelle(n) kann nun durch die Ausrichtung der Trichter vorgegeben werden.

Prinzipiell kann das Zündmaterial ebenfalls in extrudierfähiger Form verarbeitet sowie additiv abgelegt und ausgehärtet werden. Beispielsweise kann die 3D-Druckvorrichtung hierzu einen dedizierten Druckkopf aufweisen. Alternativ oder zusätzlich kann das Zündmaterial jedoch ebenso in fester Form auf, unter und/oder neben bereits abgelegten Schichten aus Sprengstoff aufgebracht werden.

Gemäß einer Weiterbildung kann das extrudierfähige Modelliermaterial unmittelbar in einen Sprengkopfbehälter des Sprengkopfes abgelegt werden.

In dieser vorteilhaften Weiterbildung wird die Sprengladung somit unmittelbar in den Sprengkopfbehälter und damit den Sprengkopf gedruckt. Alternativ kann es natürlich ebenso vorgesehen sein, zunächst eine Sprengladung zu drucken und diese zu einem späteren Fertigungszeitpunkt in einen Sprengkopfbehälter eines Sprengkopfes einzubringen.

Gemäß einer Weiterbildung kann das extrudierfähige Modelliermaterial zumindest ein drittes aushärtbares Sprengstoffgemisch umfassen. Das dritte aushärtbare Sprengstoffgemisch kann eine höhere Detonationsgeschwindigkeit als das erste aushärtbare Sprengstoffgemisch und das zweite aushärtbare Sprengstoffgemisch aufweisen. Das dritte aushärtbare Sprengstoffgemisch kann derart in den Materiallagen abgelegt werden, dass ein Zündkanal mit dem dritten Sprengstoffgemisch in der Sprengladung gebildet wird.

In dieser Weiterbildung können somit gezielt Kanäle mit hoher Detonationsgeschwindigkeit in die Sprengladung eingebracht werden. Damit wird beispielsweise eine homogenere Zündung ermöglicht, die durch einen Zünder initiiert sein kann (beispielsweise kann der Zünder anliegendend zu dem Zündkanal positioniert sein). Andererseits kann derart die Form der erzeugten Detonationsdruckwelle(n) eingestellt werden.

Gemäß einer Weiterbildung kann die 3D-Druckvorrichtung einen Druckkopf aufweisen. Der Druckkopf kann einen Materialmischer zur Vermischung eines Sprengstoffes mit einem Bindemittel, einem Härter und/oder einem Zusatzstoff zu einem Sprengstoffgemisch umfassen. Der 3D-Druckvorrichtung kann ferner eine Druckdüse zum Ablegen des Sprengstoffgemisches umfassen. Alternativ kann jedoch auch direkt ein vorgemischtes Sprengstoffgemisch verwendet werden.

Gemäß einer Weiterbildung kann das Bindemittel ein UV-härtendes Bindemittel aufweisen. Hierbei handelt es sich um ein vorteilhaftes Beispiel für einen geeigneten Aushärtemechanismus. Alternativ oder zusätzlich wird der zuständige Fachmann je nach Anwendung weitere Härteprozesse berücksichtigen, wie beispielsweise mechanische, z.B. mittels Druck, chemische, z.B. mittels Härter, physikalische, z.B. mittels Wärme, Zeit, chemische usw.

In diesem Fall kann die 3D-Druckvorrichtung eine UV-Beleuchtung umfassen, mit deren Hilfe das UV-härtende Bindemittel und damit das entsprechende Sprengstoffgemisch ausgehärtet werden kann, beispielsweise unmittelbar nach Austritt aus einer Druckdüse der 3D-Druckvorrichtung.

Gemäß einer Weiterbildung kann die 3D-Druckvorrichtung für jedes Sprengstoffgemisch und/oder für ein aushärtbares inertes Material einen separaten Druckkopf aufweisen. Prinzipiell kann jedoch ebenso ein einzelner Druckkopf dazu ausgebildet sein, unterschiedliche Sprengstoffgemisch und ggf. auch das inerte Material zu drucken.

Gemäß einer Weiterbildung kann die 3D-Druckvorrichtung weiterhin eine Ausrichtungseinrichtung umfassen. Die Ausrichtungseinrichtung kann dazu ausgebildet sein, einen Sprengkopfbehälter des Sprengkopfes zum unmittelbaren Ablegen des extrudierfähigen Modelliermaterials in den Sprengkopfbehälter auszurichten. Beispielsweise kann die Ausrichtungseinrichtung dazu ausgebildet sein, den Sprengkopfbehälter zu kippen, zu rotieren und/oder entlang mehrerer Raumachsen auszurichten.

Dies ist besonders vorteilhaft, um die Sprengladung direkt in den Sprengkopfbehälter zu drucken. Beispielsweise kann die 3D-Druckvorrichtung ein Ablage entlang mindestens dreier Achsen ermöglichen. Zusätzlich kann die Ausrichtungseinrichtung nun der Sprengkopfbehälter um eine weitere Achse rotieren, um das Einbringen der Sprengladung in den Sprengkopfbehälter zu erleichtern. Dem Fachmann wird hierbei klar sein, dass die 3D-Druckvorrichtung noch weitere Freiheitsgrade bzw. Achsen aufweisen kann. Beispielsweise kann der Druckkopf um eine fünfte Achse neig- bzw. kippbar ausgebildet sein, um das Einbringen der Sprengladung weiter zu erleichtern.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu derjeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:
- Fig. 1: schematische Ansicht einer 3D-Druckvorrichtung zur additiven Fertigung einer Sprengladung für einen Sprengkopf gemäß einer Ausführungsform der Erfindung;
- Fig. 2: schematisches Ablaufdiagramm eines 3D-Druckverfahrens mit der 3D-Druckvorrichtung aus Fig. 1; und
- Fig. 3: schematische Ansicht einer Sprengladung gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

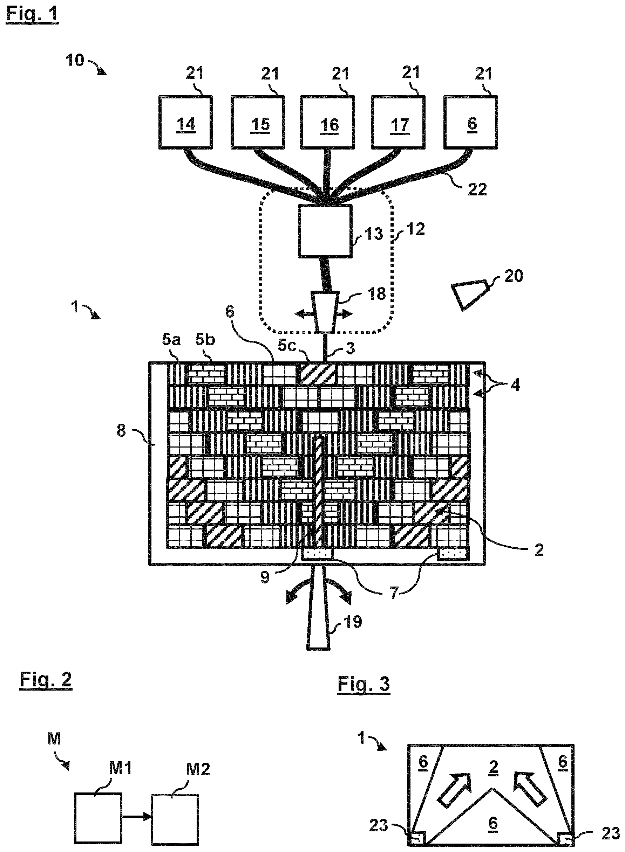

Figur 1 zeigt eine schematische Ansicht einer 3D-Druckvorrichtung 10 gemäß einer Ausführungsform der Erfindung. Ein schematisches Ablaufdiagramm für ein entsprechendes 3D-Druckverfahren M mit der 3D-Druckvorrichtung 10 ist in Fig. 2 abgebildet. Das 3D-Druckverfahren M und die 3D-Druckvorrichtung 10 dienen der additiven Fertigung einer Sprengladung 2 für einen Sprengkopf 1 (vgl. Fig. 1), z.B. eines Gefechtskopfes eines Flugkörpers wie einer Feststoffrakete oder dergleichen.

Das 3D-Druckverfahren M umfasst grundlegend unter M1 schichtweises Ablegen eines extrudierfähigen Modelliermaterials 3 in Materiallagen 4, wobei das extrudierfähige Modelliermaterial 3 unmittelbar in einen Sprengstoffbehälter 8 des Sprengkopfes 1 abgelegt wird. Weiterhin umfasst das 3D-Druckverfahren M unter M2 Aushärten des extrudierfähigen Modelliermaterials 3 in den Materiallagen 4 zur Bildung der Sprengladung 2.

Allgemein umfassen extrudierfähige Modelliermaterialien hierbei sämtliche Materialien, die mit einer geeigneten Düse extrudiert werden können. Insbesondere umfassen extrudierfähige Modelliermaterialien fließfähige Materialien. Weiterhin sind jedoch ebenso nicht fließfähige Materialien einsetzbar, die derart aufbereitet werden können (z.B. mittels Erwärmen), dass sie extrudierfähig werden. Hierbei kann die Viskosität des Materials für die Wahl der konkret verwendeten Extruderdüse berücksichtigt werden.

Hierbei umfasst das extrudierfähige Modelliermaterial 3 in dieser Ausführungsform beispielhaft drei unterschiedliche aushärtbare Sprengstoffgemische 5a-5c: ein erstes Sprengstoffgemisch 5a, ein zweites Sprengstoffgemisch 5b und ein drittes Sprengstoffgemisch 5c. Das erste aushärtbare Sprengstoffgemisch 5a wird hierbei in ersten Bereichen der Materiallagen 4 abgelegt. Entsprechend wird das zweite aushärtbare Sprengstoffgemisch 5b in zweiten Bereichen der Materiallagen 4 und das dritte aushärtbare Sprengstoffgemisch 5c in dritten Bereichen der Materiallagen 4 abgelegt.

Die ersten, zweiten und dritten Bereiche sind hierbei jeweils unterschiedliche Bereiche innerhalb der Sprengladung 2 in den Materiallagen 4. Eine beispielhafte schematische Anordnung ist in Fig. 1 gezeigt. Es versteht sich hierbei, dass die gezeigte Ausführung lediglich schematisch und beispielhaft zu verstehen ist und in anderen Ausführungsformen der Erfindung andere Anordnungen der Sprengstoffgemische 5a-5c möglich sind. Ferner können alternativ lediglich zwei unterschiedliche Sprengstoffgemische oder auch mehr als drei Sprengstoffgemische eingesetzt werden.

Die ersten, zweiten und dritten Bereiche werden in den Materiallagen 4 zur Einstellung einer vorgegebenen Detonationsdruckwellenform des Sprengkopfes 1 angeordnet und ausgebildet. Durch geeignete Wahl der Eigenschaften der Sprengstoffgemische 5a-5c und deren Anordnung können prinzipiell beliebige Formen für Detonationsdruckwellen des Sprengkopfes 1 eingestellt werden. Beispielsweise kann eine inhomogene Sprengstoffverteilung eingestellt werden, um den Detonationsverlauf bzw. die Druckwellenform gezielt zu beeinflussen. Ferner können Eigenschaften der Sprengstoffgemische 5a-5c wie beispielsweise Detonationsleistung und/oder Detonationsgeschwindigkeit variiert werden, um die Detonation weitergehend zu manipulieren.

Um die Flexibilität für die Einstellung der Detonationsdruckwellenform des Sprengkopfes 1 weiter zu verbessern, sieht das 3D-Druckverfahren M ferner die Ablage eines aushärtbaren inerten, d.h. nicht energetischen bzw. reaktiven, Materials 6 vor, welches in vierten Bereichen der Materiallagen 4 abgelegt wird (vgl. Fig. 1). Dadurch können bestimmte Detonationseffekte erzielt werden.

Dies ist in der alternativen Ausführungsform gemäß Fig. 3 beispielhaft dargestellt, wo das inerte Material 6 zwei Kegel bzw. Trichter innerhalb der Sprengladung 2 ausgehend von zwei Zündern 23 bildet. Ein Auslösen der Zünder 23 führt entsprechend zu zwei Detonationsdruckwellen, die sich entlang der Trichter fortbewegen (vgl. Pfeile in Fig. 3).

In der konkreten beispielhaften Ausführung gemäß Fig. 1 ist mittig in der Sprengladung 2 entlang einer Symmetrieachse der Sprengladung 2 ein Zündkanal 9 aus dem dritten Sprengstoffgemisch 5c ausgebildet. Hierzu ist ein Zündmaterial 7 an einem unteren Ende des Zündkanals 9 abgelegt worden. Ferner ist weiteres Zündmaterial 7 an einer radial außen liegenden Stelle vorgesehen, sodass verschiedene Detonationswellen in ein und derselben Sprengladung 2 auslösbar sind. Die Detonationsgeschwindigkeit des dritten Sprengstoffgemischs 5c ist hierbei deutlich höher gewählt, als dasjenige der ersten und zweiten Sprengstoffgemische 5a, 5b, um eine möglichst schnelle und insbesondere gleichförmige Zündung der Sprengladung 2 zu erreichen.

Die konkrete Verteilung sowie die Eigenschaften der Sprengstoffgemische 5a-5c und des inerten Materials 6 können hierbei mit einer entsprechenden Software für eine gewünschte Detonationsdruckwellenform berechnet werden.

Ausgeführt wird das 3D-Druckverfahren von der 3D-Druckvorrichtung 10 in Fig. 1. Die 3D-Druckvorrichtung 10 umfasst einen Druckkopf 12 mit einem Materialmischer 13 zum Mischen der Sprengstoffgemische 5a-5c sowie eine Druckdüse 18 zum Ablegen der Sprengstoffgemische 5a-5c. Hierzu umfasst die 3D-Druckvorrichtung 10 mehrere Materialbehälter 21 für die einzelnen Bestandteile der Sprengstoffgemische 5a-5c. Konkret umfasst die 3D-Druckvorrichtung 10 in der Ausführung gemäß Fig. 1 einen Materialbehälter 21 für einen Sprengstoff 14, einen Materialbehälter 21 für ein Bindemittel 15, einen Materialbehälter 21 für einen Härter 16 und einen Materialbehälter 21 für einen Zusatzstoff 17. Ferner ist ein Materialbehälter 21 für das inerte Material 6 vorgesehen. Die Materialbehälter 21 sind nun mit dem Materialmischer 13 über flexible Förderleitungen 22 verbunden, um diesen mit den entsprechenden Materialien für die Mischung eines bestimmten Sprengstoffgemischs 5a-5c zu versorgen.

Es versteht sich hierbei, dass die konkrete Anzahl an Materialbehältern 21 und Materialien in Fig. 1 rein beispielhaft zu verstehen ist und der Fachmann je nach Anwendung mehr oder weniger unterschiedliche Materialien vermischen bzw. verwenden kann, z.B. mehrere Sprengstoffe, Bindemittel, Härter und/oder Zusatzstoffe, bzw. bestimmte Komponenten ebenso weglassen kann. Beispielsweise kann ein Bindemittel 15 mit einem UV-härtendem Binder vorgesehen sein. Stattdessen kann das abgelegte Modelliermaterial 3 mit einer UV-Beleuchtung 20 bestrahlt werden.

Ferner wird in der beispielhaften Ausführung gemäß Fig. 1 ein einzelner Druckkopf 12 verwendet, um sämtliche Materialien zu drucken, insbesondere die unterschiedlichen Sprengstoffgemische 5a-5c. In alternativen Ausführungen kann der Fachmann jedoch ebenso mehrere Druckköpfe bereitstellen, beispielsweise für jedes Sprengstoffgemisch 5a-5c einen separaten Druckkopf.

Der Druckkopf 12 in der Ausführung in Fig.1 weist hierbei zumindest drei Bewegungsfreiheitsgrade auf, z.B. entlang der drei Raumachsen, um das Modelliermaterial 3 möglichst flexibel in den Sprengstoffbehälter 8 ablegen zu können.

In der Ausführung in Fig. 1 ist hierzu ferner eine Ausrichtungseinrichtung 19 vorgesehen, welche dazu ausgebildet ist, den Sprengstoffbehälter 8 des Sprengkopfes 1 zum unmittelbaren Ablegen des extrudierfähigen Modelliermaterials 3 in den Sprengstoffbehälter 8 auszurichten. Beispielsweise kann die Ausrichtungseinrichtung 19 dazu ausgebildet sein, den Sprengstoffbehälter 8 um eine weitere Achse zu rotieren. Zusätzlich kann der Druckkopf 12 beispielsweise gegenüber dem Sprengstoffbehälter 8 verkippt werden.

Im Ergebnis wird somit eine 3D-Druckvorrichtung 10 bzw. ein 3D-Druckverfahren M bereitgestellt, welches die Herstellung praktisch beliebiger Detonationsdruckwellenformen in einem einheitlichen, kostengünstigen und einfachen Verfahren ermöglicht.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: Sprengkopf
- 2: Sprengladung
- 3: extrudierfähiges Modelliermaterial
- 4: Materiallage
- 5a-c: aushärtbares Sprengstoffgemisch
- 6: inertes Material
- 7: Zündmaterial
- 8: Sprengkopfbehälter
- 9: Zündkanal
- 10: 3D-Druckvorrichtung
- 11: Materialaussparung
- 12: Druckkopf
- 13: Materialmischer
- 14: Sprengstoff
- 15: Bindemittel
- 16: Härter
- 17: Zusatzstoff
- 18: Druckdüse
- 19: Ausrichtungseinrichtung
- 20: UV-Beleuchtung
- 21: Materialbehälter
- 22: flexible Förderleitung
- 23: Zünder
- M: 3D-Druckverfahren
- M1-M2: Verfahrensschritte

## Patentansprüche

1. 3D-Druckverfahren (M) zur additiven Fertigung einer Sprengladung (2) für einen Sprengkopf (1), mit:
schichtweises Ablegen (M1) eines extrudierfähigen Modelliermaterials (3) in Materiallagen (4), wobei das extrudierfähige Modelliermaterial (3) zumindest zwei unterschiedliche aushärtbare Sprengstoffgemische (5a-5c) umfasst, wobei in ersten Bereichen der Materiallagen (4) ein erstes aushärtbares Sprengstoffgemisch (5a) und in zweiten Bereichen der Materiallagen (4), die sich von den ersten Bereichen unterscheiden, ein zweites aushärtbares Sprengstoffgemisch (5b) abgelegt wird, wobei die ersten Bereiche und die zweiten Bereiche in den Materiallagen (4) zur Einstellung einer vorgegebenen Detonationsdruckwellenform des Sprengkopfes (1) angeordnet werden; Aushärten (M2) des extrudierfähigen Modelliermaterials (3) in den Materiallagen (4) zur Bildung der Sprengladung (2); und
Ablegen eines Zündmaterials (7) in den Materiallagen (4) zur Bildung eines Zünders (23) zur Zündung der Sprengladung (2) des Sprengkopfes (1).

2. 3D-Druckverfahren (M) nach Anspruch 1, wobei das extrudierfähige Modelliermaterial (3) derart abgelegt wird, dass eine inhomogene Sprengstoffverteilung in der Sprengladung (2) entsteht.

3. 3D-Druckverfahren (M) nach einem der Ansprüche 1 und 2, wobei die unterschiedlichen aushärtbaren Sprengstoffgemische (5a-5c) unterschiedliche Detonationsleistungen und/oder Detonationsgeschwindigkeiten aufweisen.

4. 3D-Druckverfahren (M) nach einem der Ansprüche 1 bis 3, wobei das extrudierfähige Modelliermaterial (3) weiterhin ein aushärtbares inertes Material (6) umfasst, welches in dritten Bereichen der Materiallagen (4) abgelegt wird, die sich von den ersten Bereichen und den zweiten Bereichen unterscheiden, wobei das inerte Material (6) nach Aushärtung inerte Bereiche in der Sprengladung (2) definiert.

5. 3D-Druckverfahren (M) nach einem der Ansprüche 1 bis 4, wobei das extrudierfähige Modelliermaterial (3) unmittelbar in einen Sprengkopfbehälter (8) des Sprengkopfes (1) abgelegt wird.

6. 3D-Druckverfahren (M) nach einem der Ansprüche 1 bis 5, wobei das extrudierfähige Modelliermaterial (3) zumindest ein drittes aushärtbares Sprengstoffgemisch (5c) umfasst, welches eine höhere Detonationsgeschwindigkeit als das erste aushärtbare Sprengstoffgemisch (5a) und das zweite aushärtbare Sprengstoffgemisch (5b) aufweist, wobei das dritte aushärtbare Sprengstoffgemisch (5c) derart in den Materiallagen (4) abgelegt wird, dass ein Zündkanal (9) mit dem dritten Sprengstoffgemisch (5c) in der Sprengladung (2) gebildet wird.

7. 3D-Druckvorrichtung (10), welche zur additiven Fertigung einer Sprengladung (2) für einen Sprengkopf (1) mit einem 3D-Druckverfahren (M) nach einem der Ansprüche 1 bis 6 ausgebildet ist.

8. 3D-Druckvorrichtung (10) nach Anspruch 7, wobei die 3D-Druckvorrichtung (10) einen Druckkopf (12) aufweist, welcher umfasst:
einen Materialmischer (13) zur Vermischung eines Sprengstoffes (14) mit zumindest einem aus der Gruppe umfassend ein Bindemittel (15), einen Härter (16) und einen Zusatzstoff (17) zu einem Sprengstoffgemisch (5a-5c); und
eine Druckdüse (18) zum Ablegen des Sprengstoffgemisches (5a-5c).

9. 3D-Druckvorrichtung (10) nach einem der Ansprüche 7 und 8, wobei das Bindemittel (15) ein UV-härtendes Bindemittel aufweist.

10. 3D-Druckvorrichtung (10) nach einem der Ansprüche 7 bis 9, wobei die 3D-Druckvorrichtung (10) für jedes Sprengstoffgemisch (5a-5c) und/oder für ein aushärtbares inertes Material (6) einen separaten Druckkopf (12) aufweist.

11. 3D-Druckvorrichtung (10) nach einem der Ansprüche 7 bis 9, weiterhin mit: einer Ausrichtungseinrichtung (19), welche dazu ausgebildet ist, einen Sprengkopfbehälter (8) des Sprengkopfes (1) zum unmittelbaren Ablegen des extrudierfähigen Modelliermaterials (3) in den Sprengkopfbehälter (8) auszurichten.

12. Computerlesbares Medium, auf welchem computerausführbare Anweisungen gespeichert sind, die bei Ausführung mittels einer datenverarbeitenden Vorrichtung die datenverarbeitende Vorrichtung dazu veranlassen, ein 3D-Druckverfahren (M) nach einem der Ansprüche 1 bis 6 auszuführen.
